# EUROPEAN PATENT APPLICATION

(11) **EP 4 647 867 A1**
(43) Date of publication of application: **12.11.2025**
(21) Application number: 25170065.4
(22) Date of filing: 11.04.2025
(51) Int. Cl.: G05D 1/65, G05D 109/22, G05D 105/22, G05D 107/10, B64C 13/50

(54) **METHOD AND AIRCRAFT SYSTEM FOR INTUITIVE VTOL TRANSITIONS**

(30) Priority: 06.05.2024 US 202418656107
(71) Applicant: Honeywell International Inc., Charlotte, NC 28202 (US)
(72) Inventor: SIN, Philip, Charlotte, 28202 (US); MELENDEZ, Luis, Charlotte, 28202 (US); MAXFIELD, Jacob Kirk, Charlotte, 28202 (US)
(74) Representative: Ingrassia, Fisher & Lorenz UK Ltd.

(57) **Abstract**

Fly-by-wire vehicle systems and related control systems are provided for controlling operation of a vehicle, such as an aircraft. An exemplary method of controlling a vehicle involves identifying an input position associated with actuation of a human-machine interface, identifying a current speed of the vehicle, determining a dynamic zero acceleration reference actuation position for the human-machine interface based at least in part on the current speed, determining an acceleration command for the vehicle based on a relationship between the input actuation position and the dynamic zero acceleration reference actuation position, and providing the acceleration command to a flight control law or other control system configurable to operate one or more actuators associated with the vehicle to influence the current speed of the vehicle in accordance with the acceleration command.

## Description

### TECHNICAL FIELD

The subject matter described herein relates generally to vehicle systems, and more particularly, embodiments of the subject matter relate to control schemes for vertical take-off and landing (VTOL) aircraft and other fly-by-wire aircraft systems.

### BACKGROUND

In some modern aircraft, traditional mechanical flight control systems have been replaced with electrically controlled actuators, often referred to as fly-by-wire. Instead of mechanical linkages between cockpit controls and flight control surfaces, propulsion systems and/or lift systems, electrical signals are utilized to communicate movements of cockpit controls to the controllers associated with the appropriate flight control components or systems. Vertical take-off and landing (VTOL) aircraft, urban air mobility (UAM) vehicles and other aircraft non-conventional aircraft typically employ fly-by-wire systems to facilitate operation of any number of different actuators or effectors arranged or distributed at various locations throughout the body of the aircraft.

Typically, for fixed wing aircraft, fly-by-wire systems provide the pilot with stick to surface controls which translate control stick inputs into aircraft attitude (or attitude rate) control. For non-fixed wing aircraft, pilot controls are typically more complicated and present increased workload for the pilot as one control stick input requires a counter force from other control stick inputs to obtain a singular attitude change. VTOL aircraft introduce further complexity by requiring support for both non-fixed wing operating behavior when engaged in vertical flight and fixed wing operating behavior when engaged in forward flight. Accordingly, it is desirable to provide intuitive transitions between both forms of control that also facilitate positional control that enables a pilot to hold a fixed position. Other desirable features and characteristics will become apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

Fly-by-wire vehicle systems and related control systems and methods are provided for controlling operation of a vehicle, such as an aircraft, and more particularly, a vertical takeoff and land (VTOL) aircraft.

One exemplary method of controlling a vehicle involves identifying an input position associated with a human-machine interface, identifying a current speed of the vehicle, determining a dynamic reference position for the human-machine interface based at least in part on the current speed, determining an acceleration command for the vehicle based on a relationship between the input position and the dynamic reference position, and providing the acceleration command to a control system configurable to operate one or more actuators associated with the vehicle to influence the current speed of the vehicle in accordance with the acceleration command.

In another exemplary embodiment, an apparatus is provided for a non-transitory computer-readable medium having computer-executable instructions stored thereon that, when executed by a processing system, cause the processing system to identify an input position associated with a human-machine interface, identify a current speed of a vehicle, determine a dynamic reference position for the human-machine interface based at least in part on the current speed, determine an acceleration command for the vehicle based on a relationship between the input position and the dynamic reference position, and provide the acceleration command to a control system configurable to operate one or more actuators associated with the vehicle to influence the current speed of the vehicle in accordance with the acceleration command.

In one exemplary embodiment, an aircraft system is provided that includes a flight control component actuatable to influence at least one of a position and an attitude of an aircraft, an actuation system coupled to the flight control component to actuate the flight control component, a human-machine interface, an onboard system to provide indication of a current speed of the aircraft, and a flight control computer coupled to the actuation system, the onboard system and the human-machine interface. The flight control computer is configurable to identify an input position associated with the human-machine interface, determine a dynamic reference position for the human-machine interface based at least in part on the current speed, determine an acceleration command for the aircraft based on a relationship between the input position and the dynamic reference position, and provide an actuation command to the actuation system to operate the flight control component to influence the current speed of the aircraft in accordance with the acceleration command.

Furthermore, other desirable features and characteristics of the subject matter described herein will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a block diagram illustrating a fly-by-wire system suitable for use with a vehicle such as an aircraft in accordance with one or more exemplary embodiments;
FIG. 2 is a block diagram illustrating an exemplary control system suitable for use in the fly-by-wire system of FIG. 1;
FIG. 3 is a graph depicting an exemplary relationship between a zero longitudinal acceleration reference position for an actuatable human-machine interface or other user interface device and a longitudinal speed of an aircraft suitable for implementation by a longitudinal acceleration command determination component in the control system of FIG. 2 in one or more exemplary embodiments; and
FIG. 4 is a graph depicting an exemplary relationship between a zero vertical acceleration reference position for an actuatable human-machine interface or other user interface device, a longitudinal speed of an aircraft and a vertical speed of the aircraft suitable for implementation by a vertical acceleration command determination component in the control system of FIG. 2 in one or more exemplary embodiments.

### DETAILED DESCRIPTION

The following detailed description is merely exemplary in nature and is not intended to limit the subject matter of the application and uses thereof. Furthermore, there is no intention to be bound by any expressed or implied theory presented in the preceding technical field, background, brief summary, or the following detailed description.

Embodiments of the subject matter described herein relate to electrically controlled vehicle systems. For purposes of explanation, the subject matter is described herein primarily in the context of an aircraft where flight control components are controlled using electrical signals, however, the subject matter is not necessarily limited to use with fly-by-wire aircraft and may be implemented in an equivalent manner for other types of vehicles (e.g., automotive vehicles, marine vessels, or the like). That said, exemplary embodiments may be described herein in the context of urban air mobility (UAM) vehicles or other vertical takeoff and landing (VTOL) aircraft that include various remote actuation systems that actuate or otherwise operate flight control components which provide lift, propulsion, and/or attitude control for the aircraft, such as, for example, a flight control surface actuator, lift fan, motor, effector, or similar flight control component capable of adjusting or otherwise influencing a position or orientation of the aircraft.

As described in greater detail below, in exemplary implementations described herein, a zero acceleration reference position for a control stick, inceptor or other human-machine interface (HMI) device associated with a fly-by-wire aircraft is dynamically adjusted based on the current speed of the aircraft. In this regard, rather than determining acceleration commands based on the difference between a current input position of an inceptor and a fixed unactuated position of the inceptor, a dynamic reference position for a zero acceleration command is dynamically determined based at least in part on the current speed such that the dynamic zero acceleration reference position varies with respect to the current speed of the vehicle in a continuous manner without discontinuity (e.g., a relationship between the dynamic zero acceleration reference position and the current speed is continuous). Thus, when the current speed is nonzero, the dynamic zero acceleration reference position is different from the unactuated position of the inceptor. Accordingly, to maintain a constant speed, a pilot or other operator can maintain actuation of the inceptor at an actuated position corresponding to the zero acceleration reference position for the current speed.

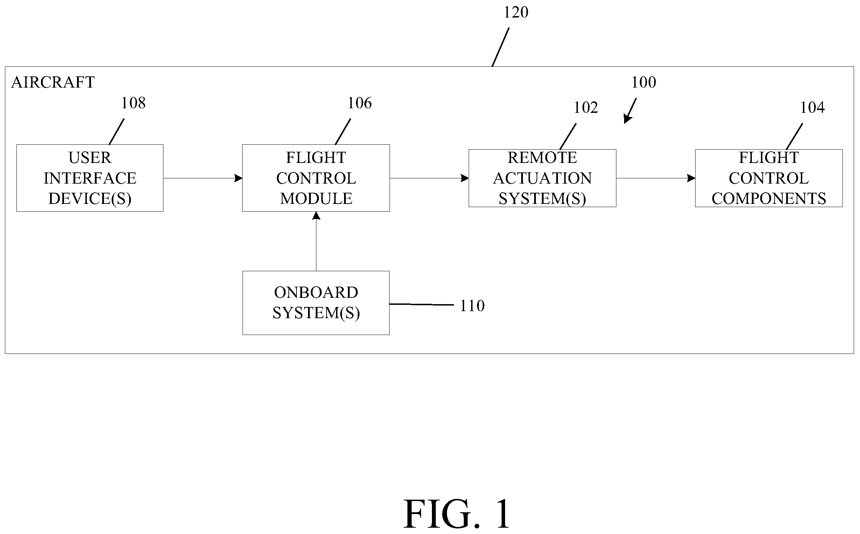

FIG. 1 depicts an exemplary embodiment of a fly-by-wire system 100 suitable for use with a vehicle such as an aircraft 120. In exemplary implementations, the aircraft 120 is realized as a UAM vehicle, a VTOL aircraft, or another aircraft that includes multiple different remote actuation systems 102 that are operable to control or otherwise manage respective flight control components 104 (e.g., propellers, lift fans, flight control surfaces and/or the like) distributed about the body of the aircraft 120, and thereby, control the position, orientation and/or attitude of the aircraft 120. In exemplary implementations, each remote actuation system 102 manages a unique flight control component 104 (or a set of flight control components) that is different from those flight control components 104 managed by other remote actuation systems 102. That said, in practice, some implementations may employ redundancy, where more than one remote actuation system 102 is capable of operating a common flight control component 104, while in other implementations, one remote actuation system 102 is capable of operating multiple different flight control components 104 concurrently.

The remote actuation systems 102 are communicatively coupled to a flight control module 106, which generally represents the processing system, processing device, hardware, circuitry, logic, software, firmware and/or other components of the fly-by-wire system 100 that are configured to receive signals indicative of a sensed or measured position, orientation, or adjustment to user interface devices 108 associated with the aircraft 120 and convert the inputs or adjustments received at the user interface devices 108 into corresponding command signals for one or more flight control components 104 and output or otherwise provide the command signals to the remote actuation systems 102. For purposes of explanation, the flight control module 106 may alternatively be referred to herein as a flight control computer (FCC). The flight control computer 106 may be implemented or realized using any suitable processing system and/or device, such as, for example, one or more processors, central processing units (CPUs), controllers, microprocessors, microcontrollers, processing cores and/or other hardware computing resources configured to support the operation described herein. In this regard, each flight control computer 106 may include or access a data storage element (or memory) capable of storing programming instructions for execution that, when read and executed by the flight control computer 106, cause the flight control computer 106 to support operations of the fly-by-wire system 100. In practice, some implementations may employ redundancy, where multiple different instances of the flight control computer 106 independently determine and provide redundant command signals to a remote actuation system 102 concurrently.

The user interface devices 108 may be realized as one or more cockpit user interface devices onboard the aircraft 120. For example, the user interface devices 108 may be realized as a control stick, inceptor or joystick including one or more sets of sensors configured to sense the orientation or angular position of a respective control stick with respect to one or more reference axes, with each sensor being coupled to the flight control computer 106 to provide indicia of the user input orientation or angular position of the respective control stick. Some exemplary arrangements of cockpit user interface devices, sensors, and flight control computers are described and depicted in United States Patent No. 11,155,341, which is incorporated by reference herein.

In practice, onboard systems 110 are communicatively coupled to the flight control computer 106 to provide real-time data and/or information regarding the operation of the aircraft 120 to the flight control computer 106 for analysis in conjunction with the user input received via the user interface device(s) 108. For example, in the context of an aircraft 120, the onboard systems 110 may include one or more avionics systems that support navigation, flight planning, and other aircraft control functions, and in practice, will likely include one or more of the following avionics systems suitably configured to support operation of the aircraft: a flight management system (FMS), a navigation system, a communications system, an autopilot system, an autothrust system, a weather system, an air traffic management system, a radar system, a traffic avoidance system, hydraulics systems, pneumatics systems, environmental systems, electrical systems, engine systems, trim systems, lighting systems, crew alerting systems, electronic checklist systems, an electronic flight bag and/or another suitable avionics system. Based on the data or information received from the respective onboard systems 110 and the user input to a respective user interface device 108, the flight control computer 106 commands for controlling the position of or otherwise operating one or more of the flight control components 104 to adjust the position and/or attitude of the aircraft 120.

During operation of the aircraft, the flight control computer 106 continually analyzes the outputs of the user interface devices 108 and the onboard avionics systems 110 to determine corresponding commands for how the respective flight control components 104 should be operated in response to adjustments or changes to the user interface devices 108 substantially in real-time. In this regard, in exemplary implementations, the flight control computer 106 calculates or otherwise determines a rate or amount of actuation associated with a particular flight control component 104 to adjust the position and/or attitude of the aircraft 120 in a manner corresponding to the user input received via a user interface device 108 and provides a corresponding command signal to the remote actuation system 102 associated with that flight control component 104 to effectuate the received user input. In exemplary embodiments, the flight control computer 106 calculates or otherwise determines a desired rate and direction of actuation for a motor or other actuator associated with a remote actuation system 102 to produce the desired actuation of the flight control component(s) 104 associated with that remote actuation system 102 to adjust the position and/or attitude of the aircraft 120 in the desired manner and provides a corresponding command signal to the remote actuation system 102 for implementation.

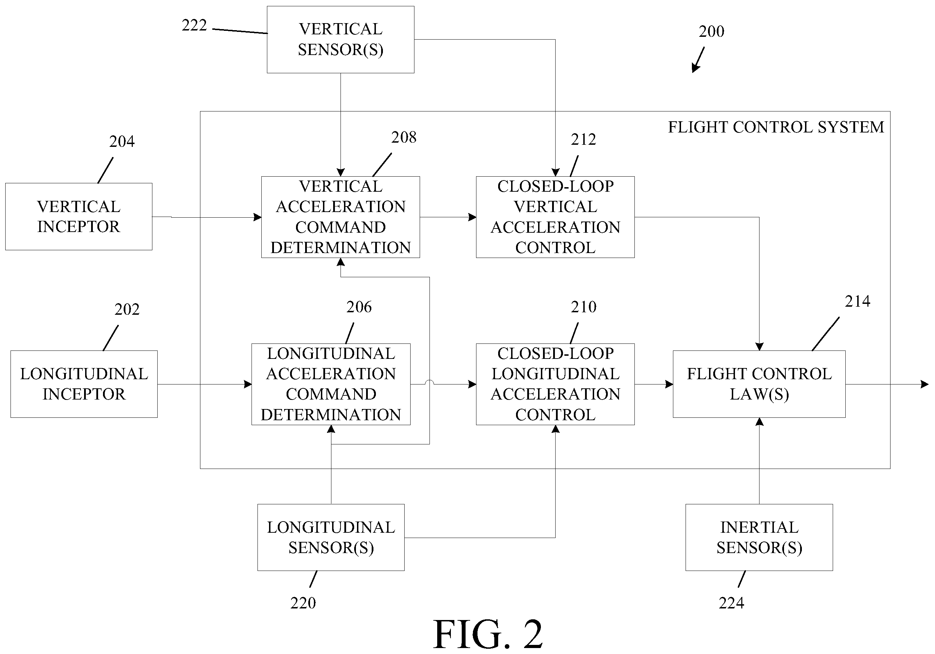

Referring now to FIG. 2 with continued reference to FIG. 1, in exemplary implementations, the flight control computer 106 is configurable to implement or otherwise support a flight control system 200, which generally represent the configured software components, services and/or processes associated with the flight control computer 106 that may be stored or otherwise maintained as code or other executable programming instructions that are executed by a processor or other processing system associated with the flight control computer 106. FIG. 2 depicts an implementation of the flight control system 200 that includes a first HMI device 202 (e.g., one of the user interface devices 108) that is manipulable to control the state or position of the aircraft 120 in the longitudinal or forward dimension (e.g., a speed lever) and a second HMI device 204 (e.g., one of the user interface devices 108) that is manipulable to control the state or position of the aircraft 120 in the vertical dimension (e.g., a pitch lever). For purposes of explanation, but without limitation, the first HMI device 202 is alternatively referred to herein as the longitudinal inceptor (or speed lever) and the second HMI device 204 is alternatively referred to herein as the vertical inceptor (or pitch lever).

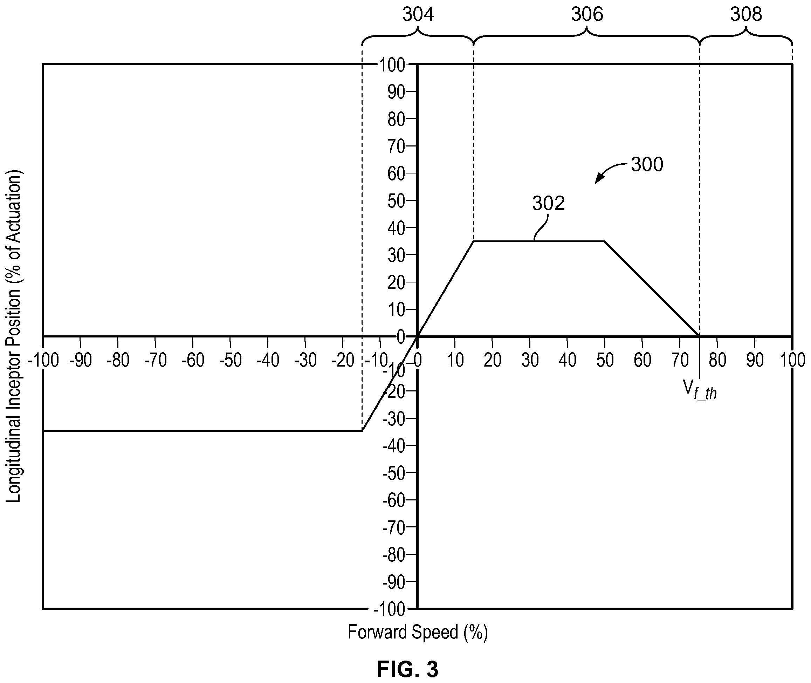

The longitudinal HMI device 202 is coupled to a longitudinal acceleration command determination component 206, which generally represents the software component associated with the flight control system 200 that is configurable to dynamically determine a zero acceleration reference position for the longitudinal HMI device 202 based on the current longitudinal speed of the aircraft 120 and generate a corresponding longitudinal acceleration command based on a difference between an input position of the longitudinal HMI device 202 and the zero acceleration reference position. The longitudinal acceleration command determination component 206 receives measurement data indicative of the current longitudinal speed and/or the current longitudinal acceleration of the aircraft 120 from one or more longitudinal speed sensors 220 (which may be part of or otherwise associated with one or more onboard systems 110) and dynamically determines the zero acceleration reference position for the longitudinal HMI device 202 based on the current longitudinal speed of the aircraft 120, as described in greater detail below in the context of FIG. 3.

In practice, the highest derivative speed control in both vertical flight and forward flight is longitudinal acceleration. Therefore, to provide a continuous speed lever input to speed control, the longitudinal acceleration is determined a function of the longitudinal speed against the speed lever input, such that an unactuated or null speed lever position does not command a constant zero acceleration (speed hold). Instead, the mapping or relationship between the zero acceleration reference position for the longitudinal HMI device 202 and the current longitudinal speed is configured such that during vertical flight or transitional flight (e.g., between primarily vertical flight and primarily forward flight), the longitudinal HMI device 202 must be held at an actuated (or nonzero) position corresponding to the dynamic zero acceleration reference position to maintain the existing ground speed constant. On the other hand, when the dynamic zero acceleration reference position is at a nonzero position based on the current longitudinal velocity, an unactuated or null input position of the longitudinal HMI device 202 results in longitudinal acceleration commands that will cause the aircraft 120 to decelerate longitudinally (e.g., to drive the longitudinal speed towards zero). Thus, returning the longitudinal HMI device 202 to the unactuated position can drive the aircraft 120 to a stop while in vertical flight, thereby enabling the pilot or other operator to maintain a fixed position while hovering in vertical flight by merely releasing actuation of the longitudinal HMI device 202.

Still referring to FIG. 2, the longitudinal acceleration command output by the longitudinal acceleration command determination component 206 is provided to a closed-loop longitudinal acceleration control component 210, which generally represents the software component associated with the flight control system 200 that is configurable to receive or otherwise obtain measurement data indicative of the current longitudinal acceleration of the aircraft 120 from the longitudinal sensor(s) 220 and provides a corresponding closed-loop longitudinal acceleration command based on the difference between the input longitudinal acceleration command corresponding to the longitudinal inceptor position from the longitudinal acceleration command determination component 206 and the current longitudinal acceleration of the aircraft 120 to regulate the current longitudinal acceleration of the aircraft 120 to the commanded longitudinal acceleration.

The vertical HMI device 204 is coupled to a vertical acceleration command determination component 208, which generally represents the software component associated with the flight control system 200 that is configurable to dynamically determine a zero acceleration reference position for the vertical HMI device 204 based on the current vertical speed of the aircraft 120 and generate a corresponding vertical acceleration command based on a difference between an input position of the vertical HMI device 204 and the zero acceleration reference position. In this regard, the vertical acceleration command determination component 208 receives measurement data indicative of the current vertical speed and/or the current vertical acceleration of the aircraft 120 from one or more vertical speed sensors 222 (which may be part of or otherwise associated with one or more onboard systems 110). Additionally, in exemplary implementations, the vertical acceleration command determination component 208 also receives measurement data indicative of the current longitudinal speed of the aircraft 120 from one or more longitudinal speed sensors 220. The vertical acceleration command determination component 208 dynamically determines the zero acceleration reference position for the vertical HMI device 204 based on the current vertical speed of the aircraft 120 and the current longitudinal speed of the aircraft 120.

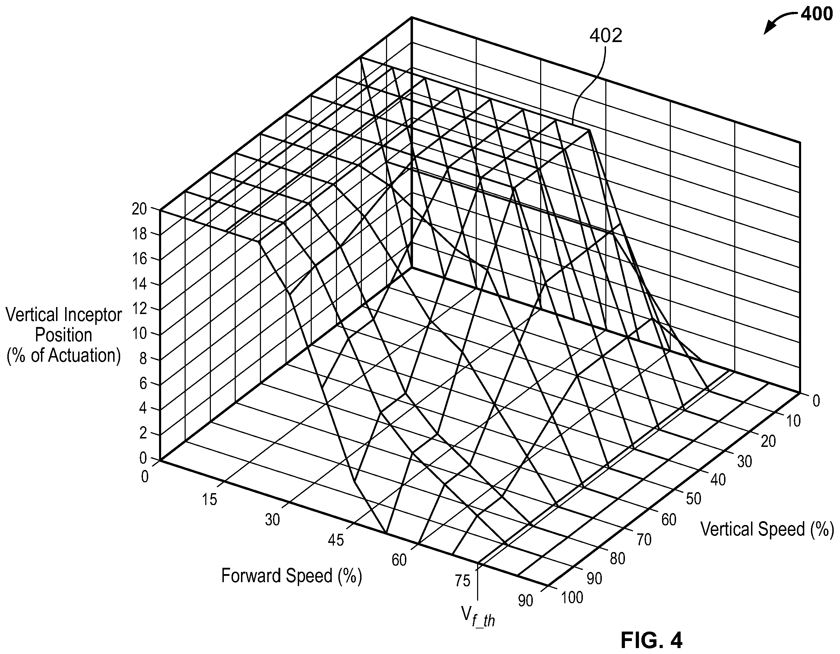

In practice, since longitudinal or forward speed dictates whether the aircraft 120 is in primarily vertical flight, primarily longitudinal flight or transitioning between the two, the longitudinal speed of the aircraft 120 influences the dynamic zero acceleration reference position for the vertical HMI device 204 and the corresponding behavior of the aircraft 120 in response to an unactuated or null input position of the vertical HMI device 204. In exemplary implementations, the mapping or relationship between the zero acceleration reference position for the vertical HMI device 204 and the current longitudinal and vertical speeds is configured to define three distinct operating regions, as described in greater detail below in the context of FIG. 4. During vertical flight with zero longitudinal speed, the dynamic zero acceleration reference position corresponds to the unactuated or null input position of the vertical HMI device 204 to allow vertical position (or altitude) to be maintained constant for an unactuated or null input to the vertical HMI device 204.

During vertical flight with a positive vertical speed and a non-zero longitudinal speed, the dynamic zero acceleration reference position is at a positive actuation position that results in vertical deceleration towards zero vertical speed (e.g., to drive the vertical speed towards zero) when the vertical HMI device 204 is not maintained in an actuated position (e.g., when the pilot or other operator removes the input or otherwise returns the vertical HMI device 204 to an unactuated position). Conversely, during vertical flight with a negative vertical speed and a non-zero longitudinal speed, the dynamic zero acceleration reference position is at a negative actuation position to also drive the vertical speed towards zero when the vertical HMI device 204 is not maintained in an actuated position.

During forward flight, the dynamic zero acceleration reference position corresponds to the unactuated or null input position for longitudinal speeds above a forward flight transition speed threshold (*V*_{*f*_*th*}) (e.g., 75% of the maximum forward speed), such that the vertical acceleration for an unactuated or null input to the vertical HMI device 204 maintains a constant flight path angle.

Still referring to FIG. 2, the vertical acceleration command output by the vertical acceleration command determination component 208 is provided to a closed-loop vertical acceleration control component 212, which generally represents the software component associated with the flight control system 200 that is configurable to receive or otherwise obtain measurement data indicative of the current vertical acceleration of the aircraft 120 from the vertical sensor(s) 222 and provides a corresponding closed-loop vertical acceleration command based on the difference between the input vertical acceleration command corresponding to the vertical inceptor position from the vertical acceleration command determination component 208 and the current vertical acceleration of the aircraft 120.

The closed-loop longitudinal and vertical acceleration commands are input or otherwise provided to a flight control law component 214, which generally represents the software component associated with the flight control system 200 that is configurable to map, transform, or otherwise convert the translational acceleration commands into corresponding translational and angular commands for operating the flight control components 104 via the remote actuation systems 102 to achieve the desired longitudinal and vertical accelerations of the aircraft 120 based on the current roll, pitch, yaw and/or other inertial measurement data for the aircraft 120 obtained via one or more inertial sensors 224 (which may be part of an inertial measurement unit (IMU) or other onboard system 110). The flight control law component 214 controls operation of the flight control components 104 to maintain operation of the aircraft 120 within a desired range of effector positions or configurations along with corresponding aircraft speeds, angles of attack and/or the like to maintain stable and/or desirable aerodynamic conditions and ensure adequate thrust or lift remains available to maintain control of the aircraft, where the precise implementation details associated therewith are not germane to this disclosure. In this regard, there are numerous different techniques or types of flight control laws for operating aircraft, and the subject matter described herein is not limited to any particular type or implementation of the flight control law component 214. The flight control law component 214 outputs actuation commands determined based on the closed-loop longitudinal and vertical acceleration commands to the respective remote actuation systems 102, which, in turn, operate the flight control components 104 to influence the longitudinal and vertical acceleration of the aircraft 120 in a manner that corresponds to the user input received via the longitudinal and vertical inceptors 202, 204.

FIG. 3 is a graph 300 depicting an exemplary continuous relationship between the dynamic zero longitudinal acceleration reference position 302 as a percentage of the range of actuation of the longitudinal inceptor 202 with respect to the current longitudinal (or forward) speed of the aircraft 120 as a percentage of a maximum forward speed of the aircraft 120. In this regard, the forward flight transition speed threshold (*V*_{*f*_*th*}) corresponds to an operating point where the flight control law associated with the flight control computer 106, 200 (e.g., flight control law component 214) determines corresponding actuation commands for operating the flight control components 104 in a manner consistent with primarily forward flight of the aircraft 120. In this regard, at longitudinal (or forward) speeds below the forward flight transition speed threshold (*V_{f_th}*), the flight control law associated with the flight control computer 106, 200 (e.g., flight control law component 214) determines corresponding actuation commands for operating the flight control components 104 in a manner consistent with primarily vertical flight of the aircraft 120 and/or transitional flight between primarily vertical flight and primarily forward flight.

As shown, when the current longitudinal speed of the aircraft 120 is equal to zero, any fore or aft actuation of the longitudinal inceptor 202 will result in a corresponding acceleration command corresponding to the difference between the percentage of actuation of the longitudinal inceptor 202. In this regard, actuation of the longitudinal inceptor 202 in a forward (or fore) direction by an amount that exceeds the zero longitudinal acceleration reference position 302 results in the longitudinal acceleration command determination component 206 outputting an acceleration command to increase the speed or velocity of the aircraft 120 in a forward longitudinal direction, while actuation of the longitudinal inceptor 202 in a rearward or aft direction by an amount that is less than the zero longitudinal acceleration reference position 302 results in the longitudinal acceleration command determination component 206 outputting a deceleration command to decrease the speed or velocity of the aircraft 120 in the forward longitudinal direction.

Within the range of longitudinal speeds corresponding to a primarily vertical flight region 304, the dynamic zero longitudinal acceleration reference position 302 continuously varies (e.g., linearly increases) with respect to the longitudinal speed of the aircraft 120 in a manner that is directly related to the longitudinal speed of the aircraft 120 to facilitate a pilot or other operator being able to maintain a substantially constant velocity (or zero acceleration) with relatively smaller actuation of the longitudinal inceptor 202, and allowing the pilot or other operator to maintain a substantially constant longitudinal position by reverting the longitudinal inceptor 202 to the unactuated position, which causes the longitudinal acceleration command determination component 206 to output deceleration commands until the forward speed is equal to zero. In the illustrated implementation, at forward speeds above an upper threshold speed defining the extent of the primarily vertical flight region 304 (e.g., 15% of the maximum forward speed), the dynamic zero longitudinal acceleration reference position 302 is maintained substantially constant with respect to the longitudinal speed of the aircraft 120 within an initial range of longitudinal speeds corresponding to a transition region 306 between the primarily vertical flight region 304 and a primarily forward flight region 308 (e.g., from 15% to 50% of the maximum forward speed), before the dynamic zero longitudinal acceleration reference position 302 continuously varies (e.g., linearly decreases) with respect to the longitudinal speed of the aircraft 120 back to the unactuated position at the forward flight transition speed threshold *V*_{*f*_*th*}.

At forward speeds above the forward flight transition speed threshold, the dynamic zero longitudinal acceleration reference position 302 operates to increase the difference between an input actuation position and the dynamic zero longitudinal acceleration reference position 302 to correspondingly increase the commanded acceleration while operating in the primarily forward flight region 308, while at the same time allowing the pilot or other operator to maintain a substantially constant forward speed while in primarily forward flight by reverting the longitudinal inceptor 202 to the unactuated position. In this regard, within the vertical or transitional flight regions 304, 306 between zero forward speed and the forward flight transition speed threshold where forward flight is maintained with a null input position, the slope or relationship of the dynamic zero longitudinal acceleration reference position 302 with respect to the current longitudinal speed of the aircraft 120 provides a desired acceleration profile (or deceleration profile) to drive the forward speed of the aircraft 120 to zero and stop in vertical flight.

FIG. 4 is a graph 400 depicting an exemplary continuous relationship between a three-dimensional surface representing the dynamic zero vertical acceleration reference position 402 as a percentage of the range of actuation of the vertical inceptor 204 with respect to the current longitudinal (or forward) speed of the aircraft 120 as a percentage of a maximum forward speed and the current vertical speed of the aircraft 120 as a percentage of the range of potential vertical speeds of the aircraft 120. In this regard, the graph 400 depicts one octant of the three-dimensional surface representing the dynamic zero vertical acceleration reference position 402 corresponding to positive actuation of the vertical inceptor 204 (e.g., in a fore direction) for positive vertical and forward speeds. As shown, the zero vertical acceleration reference position 402 is fixed at zero or an unactuated position of the vertical inceptor 204 to allow the pilot or other operator to maintain a constant vertical position for a null input or lack of actuation of the vertical inceptor 204. The zero vertical acceleration reference position 402 is greater than zero or otherwise set to an actuated position for current vertical speeds above zero to allow for deceleration towards a vertical speed of zero (e.g., a fixed vertical position) during primarily vertical flight when the pilot or other operator relaxes or ceases positive (e.g., fore) actuation of the vertical inceptor 204. For positive vertical speeds, within a transition region between primarily vertical flight and primarily forward flight, the zero vertical acceleration reference position 402 decreases with respect to increasing longitudinal speeds until reaching zero (or an unactuated position) for speeds at or above a threshold percentage of a primarily forward flight transition threshold speed (*V_{f_th}*), such that vertical speed is maintained constant (e.g., zero vertical deceleration) for a null input or lack of actuation of the vertical inceptor 204 to maintain the desired flight path angle of the aircraft 120 during forward flight.

By virtue of the subject matter described herein, a pilot or other operator can intuitively fly a VTOL aircraft and transition from primarily vertical flight to primarily forward flight without requiring extensive training and experience. In this regard, the dynamic zero acceleration reference positions provide positional control of the aircraft 120 when engaged in primarily vertical flight by allowing a fixed vertical and longitudinal position to be maintained without any actuation of the inceptors 202, 204. For example, releasing the longitudinal inceptor 202 to an unactuated position prior to transitioning to forward flight results in the longitudinal acceleration command determination component 206 results in deceleration commands to bring the aircraft 120 to a stop at a fixed longitudinal position by virtue of the dynamic zero longitudinal acceleration reference position corresponding to a positive actuated position that converges to the unactuated position at a longitudinal speed of zero as depicted in FIG. 3, thereby providing intuitive longitudinal controls while in vertical flight. Similarly, releasing the vertical inceptor 204 to an unactuated position while in vertical flight results in deceleration commands to bring the aircraft 120 to a stop at a fixed vertical position by virtue of the dynamic zero vertical acceleration reference position corresponding to a positive actuated position that converges to the unactuated position at a vertical speed of zero as depicted in FIG. 4, thereby providing intuitive vertical controls while in vertical flight. Thus, a pilot or other operator can easily and intuitively hold a fixed longitudinal and/or vertical position while in vertical flight as compared to other control schemes that provide derivative and/or attitude controls (e.g., pitch rate or the like).

On the other hand, while in primarily forward flight at longitudinal speeds above a forward flight transition speed threshold (*V*_{*f*_*th*}), releasing the longitudinal inceptor 202 to an unactuated position results in the longitudinal acceleration command determination component 206 and closed-loop longitudinal acceleration control component 210 maintaining a constant forward speed, thereby providing intuitive longitudinal controls while in forward flight. Similarly, releasing the vertical inceptor 204 to an unactuated position in forward flight results in the vertical acceleration command determination component 208 and closed-loop vertical acceleration control component 212 maintaining a constant vertical speed and flight path angle, thereby providing intuitive vertical controls while in forward flight. In this manner, the subject matter described herein intuitively transitions between vertical and forward flight controls. For example, one advantage is that no matter the speed of the aircraft and pilot inceptor inputs (or movement thereof), the accelerations generated by the respective components 206, 208, 210, 212 of the flight control system 200 are continuous, in contrast to other systems that utilize switches or other techniques to change between different operating modes, which may result in discontinuous acceleration commands (e.g., commanding negative accelerations in an initial mode and then positive accelerations for the same inceptor input after switching the mode) that can cause abrupt and potentially disturbing jerks by the closed-loop acceleration control components or other flight control laws.

For the sake of brevity, conventional techniques related to avionics systems, flight control systems, fly-by-wire systems, control sticks, inceptors or other HMIs, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims.

As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of non-transitory storage medium known in the art. An exemplary storage medium is coupled to the processor such that the processor can read information from, and write information to, the storage medium. In the alternative, the storage medium may be integral to the processor. The processor and the storage medium may reside in an ASIC.

The subject matter may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, the foregoing description may refer to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. For example, two elements may be coupled to each other physically, electronically, logically, or in any other manner, through one or more additional elements. Thus, although the drawings may depict one exemplary arrangement of elements directly connected to one another, additional intervening elements, devices, features, or components may be present in an embodiment of the depicted subject matter. In addition, certain terminology may also be used herein for the purpose of reference only, and thus are not intended to be limiting.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of controlling a vehicle, the method comprising:
identifying an input position associated with a human-machine interface;
identifying a current speed of the vehicle;
determining a dynamic reference position for the human-machine interface based at least in part on the current speed;
determining an acceleration command for the vehicle based on a relationship between the input position and the dynamic reference position; and
providing the acceleration command to a control system configurable to operate one or more actuators associated with the vehicle to influence the current speed of the vehicle in accordance with the acceleration command.

2. The method of claim 1, wherein the dynamic reference position is different from an unactuated position of the human-machine interface.

3. The method of claim 1, wherein the dynamic reference position varies with respect to the current speed of the vehicle in a continuous manner without discontinuity.

4. The method of claim 1, wherein the dynamic reference position is nonzero when the current speed is nonzero.

5. The method of claim 1, wherein determining the acceleration command comprises determining the acceleration command to reduce the current speed to zero when the input position corresponds to an unactuated reference position for the human-machine interface when the current speed is nonzero.

6. The method of claim 1, wherein determining the acceleration command comprises determining the acceleration command to maintain the current speed constant when the input position is equal to the dynamic reference position.

7. The method of claim 1, wherein determining the acceleration command comprises:
determining an actuation percentage associated with the input position based on a relationship between the input position and a range of actuation associated with the human-machine interface; and
determining the acceleration command based on a difference between the actuation percentage associated with the input position and a reference actuation percentage associated with the dynamic reference position.

8. The method of claim 1, wherein a relationship between the dynamic reference position and the current speed is continuous.

9. The method of claim 1, further comprising identifying a current forward speed of the vehicle, wherein:
the current speed of the vehicle comprises a current vertical speed of the vehicle;
determining the dynamic reference position comprises determining the dynamic reference position for the human-machine interface based at least in part on the current vertical speed and the current forward speed;
determining the acceleration command comprises determining a vertical acceleration command based on the relationship between the input position and the dynamic reference position; and
the one or more actuators influence the current vertical speed of the vehicle in accordance with the vertical acceleration command.

10. The method of claim 9, wherein the human-machine interface comprises a pitch lever and the vehicle comprises a vertical takeoff and landing (VTOL) aircraft.

11. A non-transitory computer-readable medium having computer-executable instructions stored thereon that, when executed by a processing system, cause the processing system to:
identify an input position associated with a human-machine interface;
identify a current speed of a vehicle;
determine a dynamic reference position for the human-machine interface based at least in part on the current speed;
determine an acceleration command for the vehicle based on a relationship between the input position and the dynamic reference position; and
provide the acceleration command to a control system configurable to operate one or more actuators associated with the vehicle to influence the current speed of the vehicle in accordance with the acceleration command.

12. The computer-readable medium of claim 11, wherein the dynamic reference position is different from an unactuated position of the human-machine interface.

13. The computer-readable medium of claim 11, wherein the dynamic reference position varies with respect to the current speed of the vehicle in a continuous manner without discontinuity.

14. The computer-readable medium of claim 11, wherein the dynamic reference position is nonzero when the current speed is nonzero.

15. An aircraft system comprising:
a flight control component actuatable to influence at least one of a position and an attitude of an aircraft;
an actuation system coupled to the flight control component to actuate the flight control component;
a human-machine interface;
an onboard system to provide indication of a current speed of the aircraft;
a flight control computer coupled to the actuation system, the onboard system and the human-machine interface, wherein the flight control computer is configurable to:
identify an input position associated with the human-machine interface;
determine a dynamic reference position for the human-machine interface based at least in part on the current speed;
determine an acceleration command for the aircraft based on a relationship between the input position and the dynamic reference position; and
provide an actuation command to the actuation system to operate the flight control component to influence the current speed of the aircraft in accordance with the acceleration command.
